# EUROPEAN PATENT APPLICATION

(11) **EP 4 831 582 A1**
(43) Date of publication of application: **28.10.2026**
(21) Application number: 26168876.6
(22) Date of filing: 30.03.2026
(51) Int. Cl.: G01B 11/14, G01B 3/1005, G01B 5/30, G01B 5/207

(54) **APPARATUS AND METHOD FOR INSPECTING STATOR WEDGES IN AN ELECTRIC GENERATOR**

(30) Priority: 23.04.2025 IT 202500009093
(71) Applicant: ANSALDO ENERGIA S.p.A., 16152 Genova (IT)
(72) Inventor: MARTORANA, Gianfranco, 16152 GENOVA (IT); PIGNONE, Enrico, 16152 GENOVA (IT); D'AGOSTINO, Fabrizio, 16152 GENOVA (IT)
(74) Representative: Studio Torta S.p.A.

(57) **Abstract**

An inspection apparatus for acquiring the tightness state of the stator wedges in an electric generator (7) comprises:
- a frame (22), which is configured to be mounted on a mobile robot (20) through the air gap (12) of the electric generator (7) along one of the housings at a wedge (15);
- two side probes (23) supported by the frame (22) and configured to be arranged in contact with the outer surface (16) of the wedge (15) along the side portions of the wedge (15) and a central probe (24), which is arranged between the two side probes (23), is movable with respect to the frame (22) and the side probes (23), and is configured to be maintained in contact with the central portion of the wedge (15) by means of an elastic element (36); and
- a sensor (37) mounted on the frame (22) and configured to acquire a signal correlated to the displacement of the central probe (24) with respect to the frame (22).

## Description

### Cross-Reference To Related Applications

This patent application claims priority from Italian patent application no. 102025000009093 filed on April 23, 2025, the entire disclosure of which is incorporated herein by reference.

### Technical Field of the Invention

The present invention relates to the technical field of electric generators. In particular, the present invention relates to the field of servicing for electric generators, that is, the periodic inspection activities carried out to verify the integrity of the components which form the electric generators. More specifically, the servicing activity related to the present invention refers to an inspection apparatus for performing an inspection of a surface. The purpose of this inspection is to measure an anomalous deflection of the surface, that is, to measure a deformation of the surface curve from a design configuration (flat or straight or deflected by an appropriate amount). However, the purpose of the inspection could also be to detect a simple alteration of the surface from an original (nominal) configuration. According to the invention, the surface to be inspected is an external and accessible surface of a wedge, beneath which suitable wedges (wedges or insulating shims) are used, that is, components used to secure a stator bar of an electric generator.

Therefore, the present invention relates to an apparatus and an inspection method for performing the inspection as a servicing activity in an electric generator.

In particular, the scope of the invention relates to a turbo-generator of a gas turbine set, because in this field the servicing is very important and must be performed frequently. However, the present invention may also be applied to other types of electric generators, for example an electric generator of a steam turbine set or, in general, to any electric generator comprising a wedge for securing the stator bars.

In other words, the described implementation of the present invention in the field of gas turbine sets does not limit the scope of protection of the invention itself.

### Prior Art

Usually, in an electric generator the rotating part consists of an internal rotor and the stator is a fixed structure arranged externally around the rotor. An air gap is present between the rotating internal rotor and the external stator of the electric generator. Therefore, the stator has the shape of a hollow cylindrical body in which the internal cylindrical surface faces the rotor. This internal surface is provided with a plurality of axial slots wherein each slot defines a recessed seat for a stator bar with its electrical windings. In order to avoid vibrations of the bars, each bar is "locked" in its respective slot by a system of insulating wedges.

Today, various types of insulating wedges are known. In particular, and by way of non-limiting example, the insulating wedge system may comprise two types of wedge for each bar, namely a lower wedge type (wedge or insulating shim) facing the bar and an upper wedge type facing the air gap and the rotor. The upper surface of the lower wedge is in contact with the inner surface of the upper wedge. To lock the respective bar, the lower wedge exerts pressure on the bar. As a reaction, the same pressure is applied by the lower wedge to the upper wedge. Since the upper wedge is constrained along its entire length in the slot on both side edges, due to the aforementioned pressure the outer surface of the upper wedge may deform with respect to the initial configuration. The extent of this deformation depends on the amount of pressure that is transferred from the lower wedge to the bar. In view of the above, it is possible to verify if the correct pressure is applied to the bar by measuring the deflection of the outer surface of the upper wedge, said measurement is to be associated with each stator bar or slot and with the axial position, a suitably distributed securing moreover being provided, which comprises various securings along the axis, where each securing is made by pairs of opposing lower and upper type wedges. This is why it is important to perform periodic measurements of the deflection of the outer surface of the upper wedge. Also according to the prior art, it is possible to use wedges with a flat or curved outer surface. For both types of wedge, it is important to perform a periodic inspection of the outer surface to measure any loosening (increase in clearances) of the outer or upper surface from a nominal configuration; for said technology, a different diagnostic technique is generally used (portable durometer or tapping test methodology).

According to the practice of the prior art, the inspection of the wedge surface, in particular the measurement of the deflection of the insulating wedges, is performed using "contact" inspection apparatuses as described in documents EP 553,968 A2, US 10,596613 B2, EP 403835 B1, EP 415042 B1, US 7, 743, 675, 336 B2 or "non-contact" as described in documents EP 3,675,336 B1 and US 4,901,572.

The documents identified above relate to respective inspection apparatuses configured to be inserted into the air gap between the rotor and the stator and, therefore, present the advantage of avoiding the disassembly of the rotor to perform the inspection of the wedges.

### Object And Summary Of The Invention

The object of the present invention is to provide an inspection apparatus of the type identified above which is simple, accurate and reliable.

In accordance with the present invention there is provided an inspection apparatus for stator wedges in an electric generator comprising a stator provided with an air gap and a plurality of stator bars arranged in respective housings formed in the air gap and secured by means of wedges, each of which has two side portions at the securing zone and a central portion, and a rotor which forms an air gap with the stator, the inspection apparatus comprising:
- a frame, which is configured to be mounted on a mobile robot through the air gap along one of said housings at a wedge;
- two side probes supported by the frame and configured to be arranged in contact with the outer surface of the wedge along the side portions of the wedge, and a central probe, which is arranged between the two side probes, is movable with respect to the frame and the side probes, and is configured to be maintained in contact with the central portion of the wedge by means of an elastic element; and
- a sensor mounted on the frame and configured to acquire the displacement of the central probe with respect to the frame.

In this way it is possible to acquire a signal correlated to the position of the central probe corresponding to the actual deformation of the outer or upper surface of the wedge.

In particular, the inspection apparatus comprises a mechanical displacement amplifier articulated to the frame and connected to the central probe and to a plate to amplify the displacement of the plate with respect to the displacement of the central probe, the sensor being configured to acquire a signal correlated to the displacement of the plate.

In this way, it is possible to increase the accuracy of the measurement and acquire even small variations of the wedge profile and therefore the ineffectiveness of the securing by means of the underlying wedges.

In particular, the mechanical displacement amplifier comprises a rocking body articulated about an axis to the frame and comprising a first arm configured to support the central probe at a first end and a second arm extending inside the frame on the opposite side of the first arm and configured to support said plate, the second arm having a length greater than the length of the first arm, said first and second lengths being measured with respect to the first axis.

The rocking body is in fact a lever which allows the mechanical displacement amplifier to be made in a simple and robust manner, to the benefit of the rigidity of the inspection apparatus.

In particular, the inspection apparatus as claimed in any one of the preceding claims, wherein the side probes comprise respective rolling bodies rotatable about respective second axes aligned with each other.

The rolling bodies facilitate the sliding of the inspection apparatus along the wedge.

The central probe also comprises a further rolling body rotatable about a third axis parallel to the second axes so as to further facilitate the inspection apparatus.

In accordance with a particular embodiment of the present invention, each side probe comprises an outer disc which protrudes beyond the remaining part of the respective rolling body in order to minimise the contact area of the side probe and to acquire the position of the wedge as close as possible to the engagement zone.

In particular, the plate to be detected by the sensor has a reflective face facing the sensor, so as to facilitate the reading of the displacement of the plate itself.

In accordance with an embodiment of the present invention, the inspection apparatus comprises a transmitter mounted on the frame to transmit the signals acquired by the sensor to a receiver external to the electric generator.

Structurally, the frame comprises a main wall, two facing, parallel side walls integral with the main wall and a pin that extends between the two side walls to oscillatingly support the central probe.

This structure confers a particular rigidity to the inspection apparatus, to the benefit of the accuracy of the apparatus itself.

In particular, the inspection apparatus comprises a panel, which is selectively fixable to the side walls in a position facing the main wall, and is configured to support the sensor.

A further object of the present invention is to provide an inspection method of the type identified above which is simple, accurate and reliable.

In accordance with the present invention there is provided a method for inspecting the deformation of wedges in an electric generator comprising a stator provided with an air gap and a plurality of stator bars arranged in respective housings formed in the air gap and secured by means of wedges, each of which has two side portions at the securing zone and a central portion, and a rotor which forms an air gap with the stator, the inspection method comprising:
- advancing an inspection apparatus comprising a frame through the air gap along one of said housings above a wedge;
- maintaining two side probes of the inspection apparatus in contact with the outer or upper surface of the wedge along the side portions of the wedge;
- maintaining a central probe arranged between the two side probes in contact with the central portion of the wedge by means of an elastic element; and
- acquiring the displacement of the central probe with respect to the side probes by means of a sensor.

In this way, it is possible to increase the accuracy of the measurement and acquire even small variations of the wedge profile.

### Brief Description Of The Drawings

Further benefits and advantages of the present invention will become apparent from the following description with reference to the accompanying drawings, in which:
- Figure 1 is a schematic view, with parts removed for clarity, of a gas turbine set for power plants;
- Figure 2 is a perspective view, with parts removed for clarity and in an enlarged scale, of an electric stator of the gas turbine set of Figure 1;
- Figure 3 is a front elevation view, with parts removed for clarity and in a further enlarged scale, of a detail of the electric stator of Figure 2;
- Figure 4 is a front elevation view, with parts removed for clarity, of an inspection apparatus made in accordance with the present invention and in an operating position;
- Figure 5 is a plan view, with parts removed for clarity and in a reduced scale, of the inspection apparatus of Figure 4; and
- Figures 6 and 7 are sectional views, with parts removed for clarity, of the inspection apparatus of Figure 5 respectively in a rest position and in an operating position.

### Preferred Embodiment Of The Invention

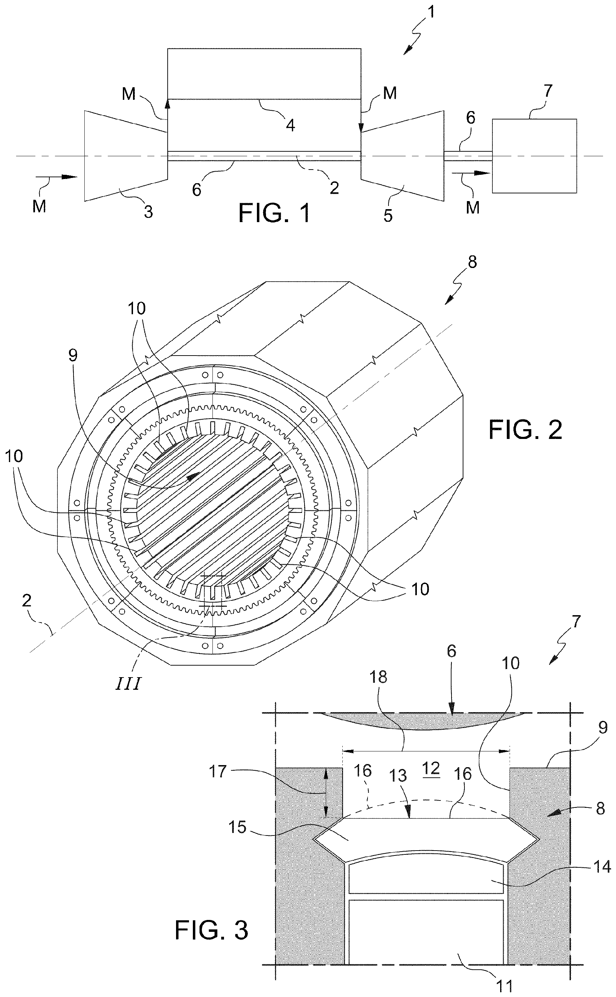

With reference to Figure 1, a gas turbine 1 is illustrated, comprising a rotor 6 rotatable about an axis 2 and comprising in series along the main flow M: a compressor unit 3, a combustion unit 4 in which the compressed air is mixed with at least one fuel and this mixture is burnt to create a hot gas flow, a turbine unit 5 in which the hot gas flow expands performing rotary work on the rotor 6.

As is known, the combustion unit may be provided with a single annular combustor or multiple can-type combustors. The exhaust gases exiting the turbine unit 5 may be used, for example, in a steam generator. According to Figure 1, downstream of the turbine unit 5 the rotor 6 operates as a rotating part in an electric generator 7.

With reference to Figure 2, the electric generator 7 comprises a stator 8 having a hollow cylindrical structure which extends along the axis 2 and is adapted to house the rotor 6 (not shown in Figure 2). As described above, the rotor 6 may be the rotor of the turbine unit 5 of Figure 1 and therefore the axis of the electric generator 7 may or may not be aligned with respect to the axis of the turbine unit 5 and the rotor of the electric generator 7 may or may not be integrated with the rotor of the turbine unit 5 passing through the compressor 3 and the turbine unit 5. The stator 8 of the electric generator 7 comprises an internal surface 9 provided with a plurality of slots 10 parallel to the axis 2 and circumferentially spaced from one another.

With reference to Figure 3, each slot 10 houses a stator bar 11, which is part of a stator electrical winding, and is arranged in a recessed position with respect to the internal surface 9. Each bar 11 is held in position by a wedge system, which comprises an inner lower wedge 14 in contact with an upper or outer wedge 15. The lower wedge 14 is configured to apply pressure on the bar 11. As a reaction, the same pressure is transmitted to the adjacent upper wedge 15, which has two opposite side ends housed in respective slots. Consequently, due to this pressure and the side constraints, the outer surface 16 of the wedge 15 deforms from the initial flat or straight configuration and assumes a curved shape, as schematically represented in Figure 3 with a dashed line. It is important to periodically inspect the surface of the wedge to verify the presence of this deformation. This deformation is in fact an indirect confirmation that a correct pressure is applied to the bar 11 inside the slot 10. As illustrated, the wedge 15 is laterally constrained on both edges in the slot 10 along its entire axial length. In Figure 3, reference 17 refers to the distance between the internal surface of the stator 9 and the recessed surface of the wedge 15 in the engagement zone. Reference 18 refers to the width of the slot 10. The wedge 15 represented in Figure 3 can be defined as "convex/concave" due to the curved deformation shown. However, as indicated in the general description of the present invention, the invention also relates to flat wedges, i.e., a wedge that shows a flat surface 13 even during the operation of the electric generator 7.

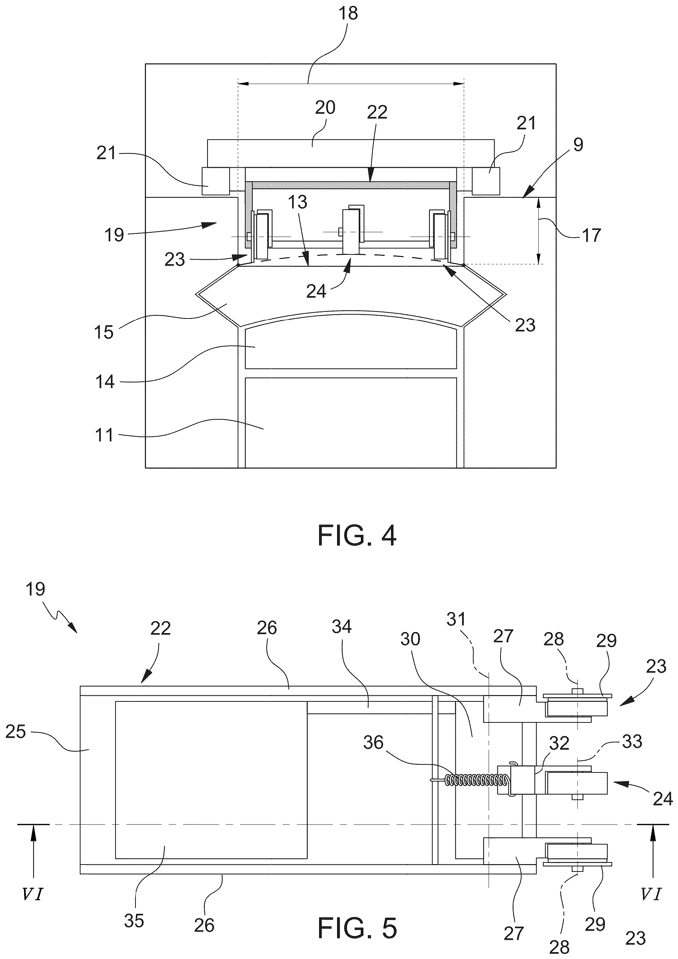

With reference to Figure 4, an inspection apparatus 19 is in contact with the wedge 15 and coupled to a robot 20 configured to be advanced into the air gap 12 on the internal surface of the stator 9. The robot 20 is bridged over the slot 10 and comprises wheels or tracks 21 which rest on the outer surface of the stator 9 by means of a magnetic coupling to ensure optimal adhesion regardless of the circumferential position of the slot 10 around the axis 2 (Figure 2). The inspection apparatus 19 comprises a frame 22, which is configured to be mounted on a mobile robot 20 through the air gap 12 along an upper wedge 15 and comprises a contact profiler comprising two side probes 23 integral with the frame 22 and configured to be maintained in contact with the upper wedge 15 along the side portions of the outer surface 16 and a central probe 24, which is arranged between the two side probes 23, is movable with respect to the frame 22 and is configured to be maintained in contact with the central portion of the outer surface 16 of the upper wedge 15.

The robot 20 and the inspection apparatus 19 are connected by an elastic coupling so as to allow the side probes 23 to be lightly pressed onto the outer surface 16 of the upper wedge 15.

With reference to Figure 5, the frame 22 comprises a main wall 25 and two side walls 26, which are integral with the main wall, and are facing and parallel to each other. The frame 22 has two arms 27 which, in part, protrude with respect to the frame 22 and are configured to support the respective side probes 23 which, in this specific case, are rolling bodies rotatable about respective axes 28 aligned with each other. Each rolling body comprises an outer disc 29 which protrudes circumferentially with respect to the remaining part of the rolling body.

The inspection apparatus 19 comprises a rocking body 30 articulated about an axis 31 parallel to the axes 28 and comprising an arm 32 configured to support the central probe 24, which is defined by a rolling body rotatable about an axis 33 parallel to the axes 28 and 31, and an arm 34 configured to support a plate 35 at its distal end.

The inspection apparatus 19 comprises an elastic element 36, which is connected to the rocking body 30 and to the frame 22 and has the function of pushing the central probe 24 against the outer surface 16 of the upper wedge 15 (Figure 4).

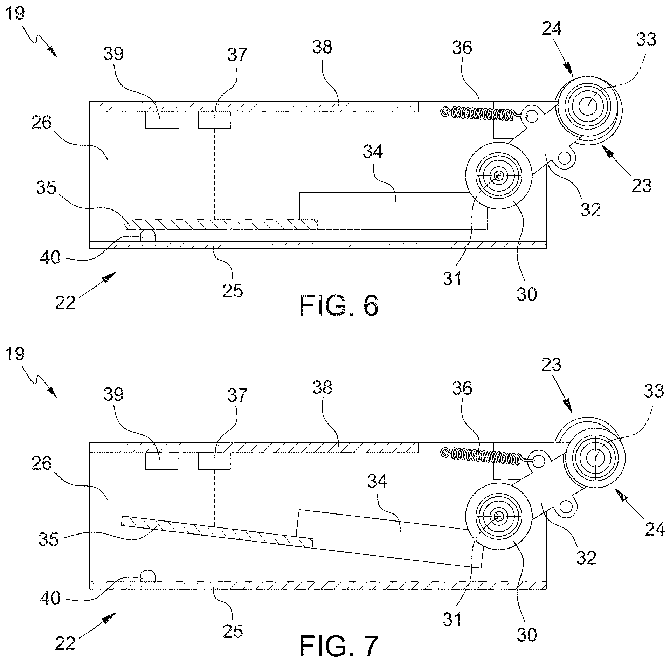

With reference to Figures 6 and 7, the inspection apparatus 19 comprises a sensor 37, in this specific case an optoelectronic sensor, having the function of acquiring a signal correlated to the position of the plate 35 with respect to the sensor 37. In order to facilitate the acquisition of the signal, the face of the plate 35 facing the sensor 37 is a diffusive surface, suitable for optical distance measurement.

The sensor 37 is mounted on a panel 38 which, in turn, is mounted on the frame 22 facing the plate 35.

The inspection apparatus 19 comprises a transmitter 39, which is mounted on the panel 38 and is configured to transmit the signals acquired by the sensor 37 to a remote processor not illustrated in the accompanying Figures.

Figure 6 shows the inspection apparatus 19 in a rest position, in which the elastic element 36 positions the rocking body 30 in a rest position, abutting against a stop element 40.

In Figure 7, when the inspection apparatus 19 is in use, and the outer surface 16 of the upper wedge 15 overcomes the force of the elastic element 36 and determines the rotation of the rocking body about the axis 31, the displacement of the central probe 24 and the displacement of the plate 35. Since the arm 34 that supports the plate 35 is longer than the arm 32 that supports the central probe 24 with reference to the axis of rotation 31, the displacement of the plate 35 is significantly greater than the displacement of the central probe 24.

In practice, the rocking body 30 also has the function of amplifying the displacement of the plate 35 with respect to the displacement of the central probe 24 so as to facilitate the reading of the displacement by the sensor 37.

Although the invention has been explained in relation to its preferred embodiment or embodiments as mentioned above, it is understood that many other possible modifications and variations can be made without departing from the scope of the present invention. It is therefore intended that the appended claim or claims cover such modifications and variations that fall within the true scope of the invention.

## Claims

1. An inspection apparatus for stator wedges in an electric generator comprising a stator provided with an air gap and a plurality of stator bars arranged in respective housings formed in the air gap and secured by means of wedges, each of which has two side portions at the securing zone and a central portion, and a rotor which forms an air gap with the stator, the inspection apparatus (19) comprising:
- a frame (22), which is configured to be mounted on a mobile robot (20) through the air gap (12) along a housing at a wedge (15);
- two side probes (23) supported by the frame (22) and configured to be arranged in contact with the outer surface (16) of the wedge (15) along the side portions of the wedge (15), and a central probe (24), which is arranged between the two side probes (23), is movable with respect to the frame (22) and the side probes (23), and is configured to be maintained in contact with the central portion of the wedge (15) by means of an elastic element (36); and
- a sensor (37) mounted on the frame (22) and configured to acquire a signal correlated to the displacement of the central probe (24) with respect to the frame (22).

2. The inspection apparatus as claimed in claim 1 and comprising a mechanical amplifier articulated to the frame (22) and connected to the central probe (24) and to a plate (35) to amplify the displacement of the plate (35) with respect to the displacement of the central probe (24), the sensor (37) being configured to acquire a signal correlated to the displacement of the plate (35).

3. The inspection apparatus as claimed in claim 2, wherein the mechanical amplifier comprises a rocking body (30) articulated about an axis (31) to the frame (22) and comprising a first arm (32) configured to support the central probe (24) at a first end and a second arm (34) extending inside the frame (22) on the opposite side of the first arm (32) and configured to support said plate (35), the second arm (34) having a length greater than the length of the first arm (32), said first and second lengths being measured with respect to the first axis (31).

4. The inspection apparatus as claimed in any one of the preceding claims, wherein the side probes (23) comprise respective rolling bodies rotatable about respective second axes (28) aligned with each other.

5. The inspection apparatus as claimed in claim 4, wherein the central probe (24) comprises a further rolling body rotatable about a third axis (33) parallel to the second axes (28).

6. The inspection apparatus as claimed in claim 4 or 5, wherein each side probe (23) comprises an outer disc which protrudes beyond the remaining part of the respective rolling body.

7. The inspection apparatus as claimed in any one of claims 2 to 6, wherein said plate to be detected by the sensor has a diffusive face facing the sensor (37).

8. The inspection apparatus as claimed in any one of the preceding claims, and comprising a transmitter (39) mounted on the frame (22) to transmit the signals acquired by the sensor (37) to a receiver external to the electric generator (7).

9. The inspection apparatus as claimed in any one of the preceding claims, wherein the frame comprises a main wall (25), two facing, parallel side walls (26) integral with the main wall (25), and a pin that extends between the two side walls (26) to oscillatingly support the central probe (24).

10. The inspection apparatus as claimed in claim 9 and comprising a panel (38), which is selectively fixable to the side walls (26) in a position facing the main wall (25), and is configured to support the sensor (37).

11. A method for inspecting the deformation of stator wedges in an electric generator comprising a stator provided with an air gap and a plurality of stator bars arranged in respective housings formed in the air gap and secured by means of wedges, each of which has two side portions at the securing zone and a central portion, and a rotor which forms an air gap with the stator, the inspection method comprising:
- advancing an inspection apparatus (19) comprising a frame (22) through the air gap (12) along a wedge (15);
- maintaining two side probes (23) of the inspection apparatus (19) in contact with the outer surface (16) of the wedge (15) along the side portions of the wedge (15),
- maintaining a central probe (24) arranged between the two side probes (23) in contact with the central portion of the wedge (15) by means of an elastic element (36); and
- acquiring the displacement of the central probe (24) with respect to the side probes (23) by means of a sensor (37) .

12. The method as claimed in claim 11 and comprising amplifying the displacement of the central probe (24) by means of a mechanical amplifier articulated to the frame (22) and connected to the central probe (24) and to a plate (35) to amplify the displacement of the plate (35) with respect to the displacement of the central probe (24).

13. The method as claimed in claim 11 or 12, and comprising transmitting the signals acquired by the sensor (37) to a receiver external to the electric generator (7).
